# EUROPÄISCHE PATENTSCHRIFT

(11) **EP 1 879 796 B1**
(45) Veröffentlichungstag und Bekanntmachung des Hinweises auf die Patenterteilung: **06.08.2008**
(21) Anmeldenummer: 06724412.9
(22) Anmeldetag: 19.04.2006
(51) Int. Cl.: B64D 11/06, B60N 2/427, B64D 25/04

(54) **SITZ, INSBESONDERE FLUGGASTSITZ**
SEAT, IN PARTICULAR AIR PASSENGER SEAT
SIEGE, NOTAMMENT SIEGE PASSAGER D'AVION

(30) Priorität: 13.05.2005 DE 102005022165
(43) Veröffentlichungstag der Anmeldung: 23.01.2008
(73) Patentinhaber: Recaro Aircraft Seating GmbH & Co. KG, 74523 Schwäbisch Hall (DE)
(72) Erfinder: STAAB, Franz, 88682 Salem (DE); HEROLD, Frank, 88074 Meckenbeuren (DE)
(74) Vertreter: Daub, Thomas
(86) Internationale Anmeldenummer: PCT/EP2006/003555
(87) Internationale Veröffentlichungsnummer: WO 2006/122626

(56) Entgegenhaltungen:
- EP-A- 0 945 302
- EP-A- 1 048 509
- DE-A1- 10 139 763
- DE-A1-4102004 004 87
- US-A- 3 037 812

## Beschreibung

Die Erfindung betrifft einen Sitz, insbesondere Fluggastsitz, mit Sitzkomponenten wie einem Sitzteil und einer Rückenlehne und mit einer Gehäuseschale.

Ein solcher Sitz ist bekannt aus der europäischen Patentanmeldung EP 1 048 509 A2, welche den nächstliegenden Stand der Technik darstellt und den Oberbegriff des Anspruchs 1 offenbart.

Ein weiterer Sitz ist beispielsweise in der DE 100 19 484 A1 näher beschrieben. Der bekannte Sitz wird regelmäßig im Business- und First-Class-Bereich von Luftfahrzeugen eingesetzt und weist einzelne Sitzkomponenten auf, in Form eines Sitzteiles, einer Rückenlehne, sowie einer Beinauflage. Die dahingehenden Sitzkomponenten sind mittels eines bedienerseitig ansteuerbaren Stabtragwerkes, mit dem der Sitz gegenüber einem Kabinenboden aufständerbar ist, in vorgebbare Positionen bringbar, so dass sich dergestalt neben einer aufrechten Sitzposition für Start und Landung auch Komfort- oder Ruhestellungen realisieren lassen, bei denen die Sitzkomponenten derart zueinander angeordnet sind, dass eine durchgehende ebene Bettfläche geschaffen ist. Um die angesprochene Sitzkinematik in Form des Stabtragwerkes gegenüber der Umgebung zu separieren und um ein gewisses Maß an Privatsphäre für den Sitzbenutzer sicherstellen zu können, sind die dahingehenden Sitzkomponenten von einer Art Umhausung (shell) als Gehäuseschale umgeben, die meist als Kunststoffformteil ausgebildet über Zusatzfunktionen verfügen können, beispielsweise zusätzlichen Stauraum aufweisen zur Aufnahme von Funktionseinheiten, wie Monitoren und dergleichen mehr.

Obwohl in dem angesprochenen First- und Business-Class-Bereich die dahingehenden Sitze relativ weit voneinander beabstandet angeordnet sind, um dem Einzelnen ein möglichst luxuriöses Reisen zu ermöglichen, ist nicht auszuschließen, dass bei einem etwaigen Crashfall ein Sitzbenutzer sich an feststehenden Sitzkomponenten verletzen kann, insbesondere an Teilen der an sich starren Gehäuseschalen, die in Flugrichtung gesehen, regelmäßig dem jeweiligen Sitzbenutzer in der Sitzreihe vorangehen. Moderne Sicherheitsstandards verlangen heute faktisch den Nachweis in Crash-Versuchen, dass beim Auftreffen von Körperteilen auf Teile des Sitzes bestimmte Grenzwerte nicht überschritten werden, wobei als kritischer Wert für den Kopf ein sogenannter HIC-Wert (Head Injury Criteria) von 1000 angesetzt ist.

Um den HIC-Wert im Crashfall möglichst niedrig zu halten und auch ansonsten Verletzungen eines Sitzbenutzers bei einem etwaigen Crasfall zu vermeiden, schlägt eine bekannte Fluggastsitz-Lösung nach der US-Patentschrift 6,003,937 vor, die Rückenlehne eines Sitzes aus mehreren Schalenteilen als Gehäuseschale aufzubauen, die im rückwärtigen Bereich in unterschiedliche Sektionen aufgeteilt, unterschiedliche Aufprallenergien im Crashfall kompensiert, in dem im oberen relevanten Kopfauftreffbereich ein schaumartiges Absorbermaterial den Stoß auffangen soll.

Durch die EP 0 945 302 A1 ist eine weitere Lösung für einen Fluggastsitz bekannt, mit einer aus mehreren Schalenteilen zusammengesetzten Gehäuseschale als Teil der Rückenlehne, von denen eine im Crashfall bedingt durch ihre Massenträgheit sich nach vorne bewegt und das rückwärtige Schalenteil verbleibt zunächst stationär und soll die Aufprallenergie von Körperteilen, wie die eines Kopfes absorbieren. Dabei können sich in einer Art Nachführbewegung Teile der rückwärtigen Gehäuseschale auf das vorauseilende schalenartige Rückenlehnenteil zur Energieminderung zustellen.

Die bekannten Lösungen als Bestandteil von Rückenlehnen bei Fluggastsitzen lassen im wesentlichen einen möglichen Aufprall gegen feststehende Sitzteile im Rückenlehnenbereich zu, und versuchen unter Einsatz von Absorbermaterialien oder dem Zulassen definierter Verformungen die Aufprallenergie in einem Maße zu reduzieren, dass jedenfalls schädliche HIC-Werte größer 1000, die zum Tode führen könnten, vermieden sind.

Ausgehend von diesem Stand der Technik stellt sich die Erfindung die Aufgabe, die bekannten Lösungen dahingehend weiter zu verbessern, dass bei einem Crashfall die mögliche Verletzungsgefahr für einen Sitzbenutzer noch weiter reduziert ist. Eine dahingehende Aufgabe löst ein Sitz mit den Merkmalen des Patentanspruches 1 in seiner Gesamtheit.

Dadurch, dass gemäß den Merkmalen des Patentanspruches 1 bei einer Gehäuseschale des Sitzes, die entweder Bestandteil der Rückenlehne ist oder die zumindest teilweise die Rückenlehne rückwärtig umfasst, diese aus mindestens zwei Schalenteilen besteht, die zumindest in einem Ausgangszustand über eine Festlegeeinrichtung miteinander verbunden sind und von denen das eine Schalenteil unter einer schlagartigen Krafteinleitung, wie beispielsweise im Crashfall, sich relativ gegenüber dem anderen Schalenteil derart bewegt, dass ein Eingriffsraum zwischen den Schalenteilen freigegeben ist, ist eine Lösung geschaffen, bei der im Crashfall Körperteile des Sitzbenutzers wie sein Kopf zwar noch wie im Stand der Technik aufgezeigt, auf Schalenteile im Rückenlehnenbereich des Sitzes auftreffen können; dass aber ohne größeren Widerstand ein dahingehend getroffenes Schalenteil sich zu dem jeweils anderen stationär angeordneten Schalenteil in einer Richtung, hervorgerufen durch den impulsartigen Krafteintrag weiterbewegt, der die Freigabe eines Eingriffsraums ermöglicht, in den das angesprochene Körperteil, wie der Kopf dann ungehindert von massiven Fremdteilen vordringen kann, so dass insoweit dem Körperteil freie Bahn geschaffen ist. Dieser kann also erst gar nicht in solcher Weise mit mehr oder minder stationär angeordneten Sitzteilen in Berührung kommen, die ansonsten zu erheblichen Verletzungen führen können mit gegebenenfalls eintretender Todesfolge, was insbesondere der Fall ist, wenn die eingangs angesprochenen HIC-Grenzwerte überschritten sind.

Da in der beschriebenen Notfallsituation keine direkten Crashkräfte über den Sitzbenutzer in die Sitzstruktur eingeleitet werden, ist auch insoweit eine erneute Inbetriebnahme des Sitzes möglich, wobei bei der anstehenden Wartung dann jedenfalls der Eingriffsraum über ein korrespondierendes Schalenteil erneut zu schließen ist. Die erfindungs-gemäße Lösung vermeidet durch Schaffen eines Eingriffsraumes für Körperteile wie einem Kopf, dass kollisionsbedingt schädlich hohe HIC-Werte erst gar nicht auftreten können. Die erfindungsgemäße Lösung kommt ohne kostenintensive Zusatzteile aus und der grundsätzliche Aufbau ist mit Teilen erreicht, die ohnehin für die Realisierung der Rückenlehne oder eine die Rückenlehne auf Abstand umgebende Gehäuseschale (shell) notwendig wären. Mithin ist die erfindungsgemäße Lösung auch kostengünstig in der Realisierung und das erfindungsgemäße Sicherheitskonzept läßt sich ohne wesentliche bauliche Änderungen - auch als Nachrüstsatz -, sowohl in einer externen Umhausung als Gehäuseschale, sowie in der Rückenlehne selbst integrieren, wobei im letztgenannten Fall für den Eingriffsraum in dem sich anschließenden Polsterschaum entsprechend Platz zu schaffen ist.

Bei einer bevorzugten Ausführungsform des erfindungsgemäßen Sitzes ist vorgesehen, dass in dem Ausgangszustand das eine Schalenteil derart in dem anderen stationär angeordneten Schalenteil integriert ist, dass zumindest im rückwärtigen Bereich an den Stellen des Überganges zwischen den Schalenteilen eine gleichförmige Oberfläche realisiert ist. Hierdurch werden zum einen ein Gefahrenpotential darstellende Kanten oder sonstige überstehende Bereiche vermieden, und es ergibt sich auch eine ästhetisch ansprechende Formgebung des rückwärtigen Bereichs der Gehäuseschale des betreffenden Sitzes. Auch ist derart der schützende Eingriffsraum als Sicherheitseinrichtung abgedeckt und ein Sitzbenutzer, insbesondere ein ängstlicher Fluggast, wird durch das ansonsten sichtbare Vorhandensein von Sicherheitseinrichtungen nicht beunruhigt.

Vorzugsweise ist des weiteren vorgesehen, dass im Ausgangszustand das eine Schalenteil zur Rückseite der Gehäuseschale derart bündig mit dem anderen Schalenteil abschließt, dass eine im wesentlichen in sich geschlossene Oberseite entsteht, die der sonstigen Kontur der Gehäuseschale im rückwärtigen Bereich nachfolgt. Hierdurch entsteht eine in sich konturierte, glatte und weitgehend geschlossene Oberfläche, die ästhetisch wirkt und die auch außerhalb eines möglichen Crashfalles ein etwaiges Verletzungs- oder Behinderungsrisiko reduzieren hilft, was insbesondere dann auftritt, wenn bei einer Sitzreihe mit nebeneinander angeordneten Sitzen quer zur Flugrichtung vom Gang kommend, insbesondere bei einem belegten Gangplatz, ein Sitzbenutzer auf einen der nachfolgenden Sitze erst noch gelangen muss.

Bei einer besonders bevorzugten Ausführungsform des erfindungsgemäßen Sitzes ist vorgesehen, dass das andere Schalenteil eine äußere bügelförmige Umfassung aufweist, die in Richtung der Kopfseite das eine Schalenteil schützend übergreift. Abgesehen von dem genannten Schutz für das eine Schalenteil ergibt sich aufgrund der bügelförmigen Umfassung eine Erhöhung der Stabilität des Sitzes, auch in Form einer rückwärtigen Gehäuseschale oder Umhausung (shell), so dass jedenfalls sichergestellt ist, dass auch bei Freigabe des Eingriffraumes über das eine Schalenteil im Crashfall der Sitz von seiner Grundstruktur her erhalten bleibt und Sitzteile nicht ungewollt zusammenklappen können.

Bei einer weiteren bevorzugten Ausführungsform des erfindungsgemäßen Sitzes hält die Festlegeeinrichtung im Ausgangszustand das eine Schalenteil im anderen Schalenteil und bei einer schlagartigen Krafteinleitung, wie im Crashfall, gibt die Festlegeeinrichtung das eine Schalenteil insoweit frei, dass der Eingriffsraum von außen zugänglich ist. Hierbei ist vorzugsweise die Festlegeeinrichtung dergestalt ausgeführt, dass sie eine im Ausgangszustand an Stellen des Übergangs zwischen den Schalenteilen gleichförmige Oberfläche beibehält, also nicht über die Kontur der Gehäuseschale im rückwärtigen Bereich herausragt, so dass durch die Festlegeeinrichtung keine zusätzliche Verletzungsgefahr ausgehen kann.

Bei einer weiteren bevorzugten Ausführungsform des erfindungsgemäßen Sitzes weist die Festlegeeinrichtung mindestens eine Anlenkstelle auf, die die jeweils zuordenbare Stelle des Überganges zwischen den Schalenteilen durchgreift und die in der Art einer Verriegelungs- oder Rasteinrichtung, einer Sollbruchstelle oder einer Schwenkeinrichtung ausgebildet ist. Hierbei läßt sich die Anlenkstelle dergestalt ausführen, dass erst bei einem vorgebbaren Grenzwert an Aufprallenergie die Sicherheitseinrichtung mit Freigabe des Eingriffsraumes auslöst, um dergestalt Fehlauslösungen zu vermeiden.

Bei einer weiteren bevorzugten Ausführungsform der erfindungsgemäßen Lösung sind mindestens zwei Anlenkstellen in gleicher Höhenlage, insbesondere zur Kopfseite des Sitzes hin orientiert derart ausgeführt, dass sie die beiden einander gegenüberliegenden Stellen des Überganges zwischen den Sitzschalenteilen durchgreifen. Bei einer derartigen Ausführungsform können die Anlenkstellen z.B. durch zwei Gelenkstellen gebildet werden. Auf diese Weise ist das eine Schalenteil bei der schlagartigen Krafteinleitung zwar in der Art einer Schaukel oder Wippe bewegbar und gibt den Eingriffsraum zwischen den Schalenteilen frei; bleibt aber über die genannten Gelenkstellen mit dem anderen Schalenteil scharnierartig verbunden.

Bei einer weiteren bevorzugten Ausführungsform der erfindungsgemäßen Lösung ist in das eine Schalenteil ein ausschwenkbares Modul, insbesondere in Form einer Tischeinheit aufgenommen. Im eingeschwenkten Zustand des Moduls in das eine Schalenteil ist dieses gegenüber dem anderen Schalenteil hierbei durch die Festlegeeinrichtung freigegeben, kann also beispielsweise im Crashfall bewegt werden; im ausgeschwenkten Zustand des Moduls verhindert aber die Festlegeeinrichtung die dahingehende Freigabe, um sicherzustellen, dass nicht ungewollt die Sicherheitseinrichtung unter Freigabe des Eingriffsraumes auslöst.

Die erfindungsgemäße Sitzlösung braucht für seinen Einsatz nicht auf die Verwendung als Fluggastsitz eingeschränkt zu sein, sondern kann auch bei Schiffen, beispielsweise im Fährbetrieb eingesetzt werden oder bei anderen Reisefahrzeugen wie Zügen oder Omnibussen.

Weitere vorteilhafte Ausführungsformen des erfindungsgemäßen Sitzes sind Gegenstand der sonstigen Unteransprüche.

Im Folgenden wird der erfindungsgemäße Sitz anhand verschiedener Ausführungsformen bei einem Fluggastsitz näher erläutert. Dabei zeigen in prinzipieller und nicht maßstäblicher Darstellung die
- Fig.1: einen Teil einer Fluggastsitz-Bestuhlung mit einem Fluggastsitz einmal in der aufrechten Sitzdarstellung gezeigt, einmal in der Ruheposition, wobei ein stehender und ein liegender Sitzbenutzer einen Anhalt im Hinblick auf die Größenverhältnisse und Anordnungen der Bestuhlung geben;
- Fig.2: in perspektivischer rückwärtiger Darstellung eine bei einem Sitz nach der Fig. 1 einsetzbare Sicherheitseinrichtung, einmal im Ausgangszustand, einmal im ausgelösten Sicherheitszustand;
- Fig. 3: eine der Fig. 2 entsprechende Darstellung einer geänderten Ausführungsform der Sicherheitseinrichtung, wobei der einfacheren Darstellung wegen die Schalenteile weggelassen wurden und in der unteren Bildhälfte der Fig. 3 ist in vergrößerter Darstellung ein Auslösemechanismus für die Sicherheitseinrichtung exemplarisch gezeigt; und
- Fig.4: eine der Fig.2 entsprechende Darstellung einer weiteren, geänderten Ausführungsform der Sicherheitseinrichtung in prinzipieller Seitenansicht gesehen mit einer Kulissenführung als Teil des Auslösemechanismus.

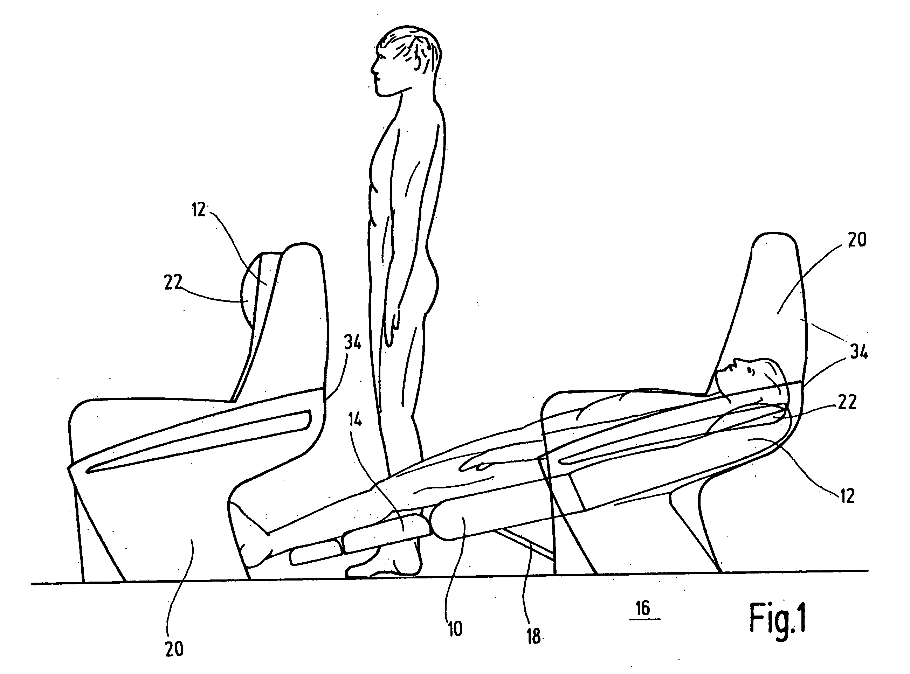

Der jeweilige Fluggastsitz nach der Fig. 1 ist mit mehreren Sitzkomponenten versehen, wie einem Sitzteil 10, einer Rückenlehne 12, sowie einer mehrteiligen Beinauflage 14. Die dahingehenden Sitzkomponenten sind über eine Einstelleinrichtung relativ zueinander bewegbar gehalten, wobei die Einstelleinrichtung mehrere Gelenkstellen aufweist, die untereinander über ein Stabtragwerk miteinander verbunden sind, das unter anderem das Sitzteil 10 trägt und dessen Aufständerung gegenüber einem Kabinen- oder Fahrzeugboden 16 ermöglicht. Von dem dahingehenden Stabtragwerk ist gemäß der Darstellung nach der Fig. 1 nur ein vorderer Anlenkstab 18 zu sehen, und was die weiteren Einzelheiten der Sitzkinematik anbelangt, sind diese bekannt und beispielsweise in der DE 100 19 484 A1 offenbart. Mit der Sitzkinematik ist es jedenfalls möglich, die angesprochenen Sitzkomponenten von einer Ausgangslage wie sie für Start, Landung und Rollen besteht (TTL-Position) und wie er in Blickrichtung auf die Fig. 1 gesehen links dargestellt ist, in eine sogenannte Ruhe- oder Bettposition zu verfahren, bei dem die einzelnen Sitzkomponenten 10, 12, 14 eine im wesentlichen geradlinig verlaufende Auflagefläche ausbilden, gemäß der rechten Darstellung nach der Fig. 1. Ferner ist es möglich, mittels der Sitzkinematik nicht näher dargestellte Zwischenpositionen zwischen der Ausgangsposition und der Schlaf- oder Ruheposition anzufahren (nicht dargestellt).

Um ein gewisses Maß an Privatsphäre herstellen zu können und im übrigen auch die angesprochene Sitzkinematik gegenüber der Umgebung abzuschirmen, ist der Sitz mit einer mehrteiligen Gehäuseschale 20 umgeben, die in der Ausgangsstellung im wesentlichen in der selben Höhe endet, wie die Oberseite der Rückenlehne und die zur Sitzvorderkante hin das Sitzteil 10 derart auch seitlich schützend umgreift. Damit sich die Sitzkomponenten frei innerhalb der Gehäuseschale 20 bewegen können, ist jedenfalls insoweit ein rückwärtiger Abstand zwischen Rückenlehne 12 und Gehäuseschale 20 in diesem Bereich vorgegeben.

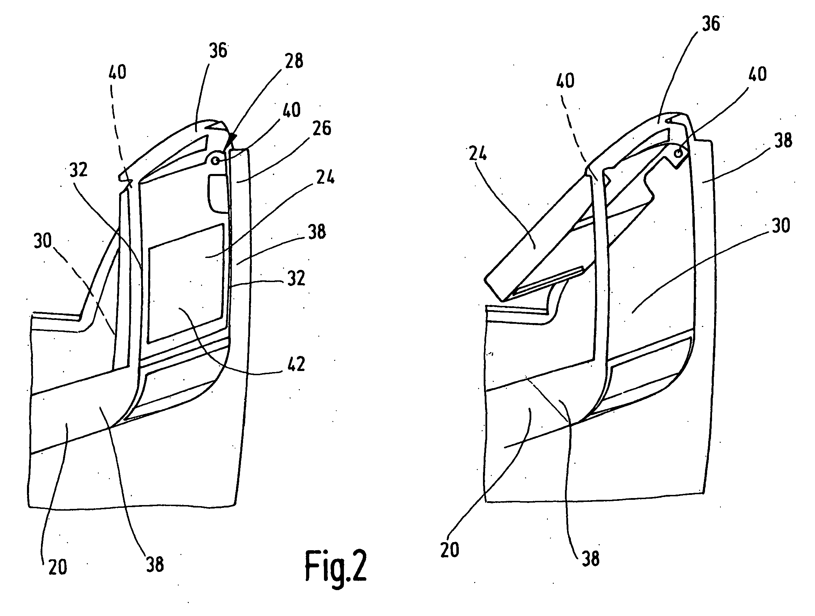

Zur näheren Erläuterung der erfindungsgemäßen Sicherheitseinrichtung ist in perspektivischer Darstellung in der Fig. 2 nur das obere Ende der Gehäuseschale 20 wiedergegeben, also der Bereich innerhalb der sich eine etwaig vorgesehene Kopfstütze 22 gemäß der Darstellung nach der Fig. 1 von ihrer Ausgangslage in die Ruhe- oder Schlafstellung, sowie umgekehrt zu bewegen hat. Der besseren Darstellung wegen wurden in der Fig. 2 sowohl Teile der mehrteiligen Gehäuseschale 20 weggelassen, als auch diese zumindest teilweise umgebende Polster- und Bezugmaterialien. Im interessierenden Bereich der vorgesehenen Sicherheitseinrichtung weist die Gehäuseschale 20 zwei Schalenteile 24, 26 auf, die zumindest im Ausgangszustand über eine als Ganzes mit 28 bezeichnete Festlege-einrichtung miteinander verbunden sind und von denen das eine Schalen-teil 24 unter einer schlagartigen Krafteinleitung, wie beispielsweise im Crashfall, sich relativ gegenüber dem anderen Schalenteil 26 derart bewegt, dass ein Eingriffsraum 30 zwischen den Schalenteilen 24, 26 freigegeben ist (siehe Fig. 2, rechte Darstellung). Hat die Sicherheitseinrichtung nicht ausgelöst, ist diese also in dem Ausgangszustand gemäß der linken Darstellung von Fig. 2, ist das eine Schalenteil 24 derart in dem anderen 26 stationär angeordnet, dass zumindest im rückwärtigen Bereich und an den Stellen 32 des Überganges zwischen den Schalenteilen 24, 26 eine gleichförmige Oberfläche realisiert ist. Insbesondere ist im Ausgangszustand das eine Schalenteil 24 zur Rückseite der Gehäuseschale 20 derart bündig mit dem anderen Schalenteil 26 abschließend angeordnet, das eine im wesentlichen in sich geschlossene Oberseite entsteht, die der sonstigen Kontur 34 der Gehäuseschale 20 im rückwärtigen Bereich nachfolgt.

Im oberen Bereich weist das andere Schalenteile 26 eine äußere bügelförmige Umfassung 36 auf, die somit in Richtung der Kopfseite das eine Schalenteil 24 schützend übergreift und insbesondere sicherstellt, dass auch im Crashfall der Eingriffsraum 30 erhalten bleibt, in dem die bügelartige Umfassung 36 die beiden Seitenlängswände 38 der Gehäuseschale 20 auseinanderzuhalten sucht. Dergestalt ist auch ein, das tödliche Verletzungsrisiko erhöhendes Zusammenklappen von Sitzteilen weitgehend ausgeschlossen, da die dahingehende Umfassung (shell 20) den Sitz mit seinen Sitzkomponenten auch im Bereich der Rückenlehne schützt.

Die Festlegeeinrichtung 28 hält im Ausgangszustand das eine Schalenteil 24 im anderen Schalenteil 26, wobei bei einer schlagartigen Krafteinleitung die Festlegeeinrichtung 28 das eine Schalenteil 24 insoweit freigibt, dass der Eingriffsraum 30 von außen her zugänglich ist. Bei der gezeigten Ausführungsform nach der Fig. 2 weist die Festlegeeinrichtung 28 zwei Anlenkstellen 40 auf, die die jeweils zuordenbare Stelle 32 des Überganges zwischen den Schalenteilen 24, 26 durchgreifen und die in der Art einer Schwenkeinrichtung ausgebildet mit Schwenkzapfen versehen sind. Insbesondere sind die beiden genannten Anlenkstellen 40 in Form der Schwenkzapfen in gleicher Höhenlage gegenüberliegend angeordnet und die Schwenkzapfen stecken mit ihrem einen freien Ende stationär in dem Schalenteil 26 und das Schalenteil 24 weist Durchgriffe auf für den Eingriff des jeweils anderen freien Endes der Schwenkzapfen, um dergestalt wie in der Fig. 2 dargestellt, eine Schwenkbewegung des Schalenteiles 24 im Uhrzeigersinn ermöglichen zu können. Das eine Schalenteil 24 ist mithin in der Art einer Schwenkplatte ausgebildet und kann zur Aufnahme eines Bildschirms oder Monitors mit einer rechteckförmigen Ausnehmung 42 im rückwärtigen Bereich versehen sein. Auch kann die Ausnehmung 42 dazu dienen, ein nicht näher dargestelltes Absorbermaterial, beispielsweise in Form eines weichen Schaumstoffes aufzunehmen, um dergestalt etwaige Auftreffkräfte von Körperteilen eines rückwärtig sitzenden Sitzbenutzers aufzunehmen und dergestalt das Verletzungsrisiko zu minimieren.

Gemäß Inhalt der Fachveröffentlichung "Crash-Analyse, Beschreibung der Kriterien", Version 1.6.1 des Arbeitskreises Meßdatenverarbeitung Fahrzeugsicherheit mit Ausgabedatum April 2004, erhältlich von der Bundesanstalt für Straßenwesen mit Sitz in Bergisch Gladbach, sind dort sogenannte Kopfkriterien beschrieben, die man auch mit HIC für Head Injury Criterion als Kurzform bezeichnet. Die dahingehende Fachveröffentlichung beschreibt zum einen, wie man in mathematischer Auslegung zu den einschlägigen HIC-Werten gelangt und gibt des weiteren als kritischen HIC-Grenzwert einen solchen von 1000 an, der vorzugsweise deutlich zu unterschreiten ist, um gravierende oder gar tödliche Unfälle im Crashfall von Luftfahrzeugen zu vermeiden.

Hier setzt die erfindungsgemäße Sicherheitseinrichtung an, die vorsieht, dass bei einem etwaigen Auftreffen des Kopfes eines rückwärtig sitzenden Sitzbenutzers entlang einer Aufschlagbahn auf das eine Schalenteil 24 im Bereich der Ausnehmung 42 dieses, um die Anlenkstellen 40 eine Schwenkbewegung nach vorne, also in Richtung der Sitzvorderseite ausführt, um dergestalt einen Eingriffsraum 30 freizugeben, der vorzugsweise mit einem absorbierenden Auffangmaterial (nicht dargestellt) versehen den Aufschlag in Richtung unkritischer HIC-Werte bremst und aufnimmt. Um einen möglichst großen keilförmigen Eingriffsraum 30 innerhalb des Schalenteiles 26 zur Verfügung stellen zu können, sollte die dahingehende Vorwärtsschwenkbewegung des Schalenteiles 24 nicht behindert sein, d.h. in der aufrechten Sitzausgangsstellung des Sitzes (vgl. Fig. 1) ist vorzusehen, dass ein hinreichender Abstand zwischen dem rückwärtigen Rückenlehnenteil des Sitzes und der Gehäuseschale 20 in diesem Bereich besteht, um dergestalt genügend Raum für die Schwenkbewegung zur Verfügung zu stellen. Sofern man die Schalenteile 24, 26 zumindest teilweise mit Polster- und/oder Bezugmaterialien oberflächenseitig ausstatten möchte, ist die dahingehende Ausgestaltung jedenfalls so zu wählen, dass nach Krafteinwirkung bei einem Aufprall das Schalenteil 24 seine Ausgangsposition verlassen kann.

Neben den genannten Anlenkstellen 40 können weitere nicht näher dargestellte Teile der Festlegeeinrichtung 28 zusätzlichen Halt schaffen, beispielsweise in dem das eine Schalenteil 24 im unteren Bereich über Haftverschlußbänder oder dergleichen mit dem anderen Schalenteil 26 verbunden ist. Auch kann grundsätzlich vorgesehen sein, dass anstelle von Anlenkstellen 40 in Form der Schwenkzapfen die Festlegeeinrichtung 28 so konzipiert ist, beispielsweise in der Art einer Verriegelungs- oder Rasteinrichtung, einer Sollbruchstelle oder dergleichen, dass grundsätzlich auch in einer linearen Fliehbewegung sich die Schalenteile 24, 26 voneinander lösen können. Sollte im Crashfall der Sitz jedenfalls nicht allzu hohen Belastungen ausgesetzt gewesen sein, läßt sich durch Einwechseln eines neuen Schalenteiles 24 gegebenenfalls unter weiterem Austausch der Grundschalenstruktur 26 der Sitz mit seiner externen Gehäuseschale erneut komplementieren und dergestalt wieder einsetzen.

Des weiteren besteht die Möglichkeit, die in Fig. 2 gezeigte Mimik nicht in eine externe Umhausung als Gehäuseschale 20 einzusetzen, sondern vielmehr diese unmittelbar im Bereich der Rückenlehne 12 in diese zu integrieren, wobei die nicht näher dargestellte Rückenlehne 12 dann aber so zu konzipieren ist, dass Eindringraum für das Schalenteil 24 im Schalenteil 26 zur Verfügung steht, um den Eingriffsraum 30 sicher freigeben zu können.

Hierbei besteht auch grundsätzlich die Möglichkeit, das Schalenteil 24 mit einem Kunststoff- oder vorzugsweise Schaumstoffeinsatz auszubilden, der insoweit eine sichere Aufschlagdämpfung gewährleisten kann, auch wenn die freie Verfahrstrecke für das eine Schalenteil 24 im Crashfall aufgrund der beengten Einbauverhältnisse im rückwärtigen Rückenlehnenbereich nur gering ausfallen sollte.

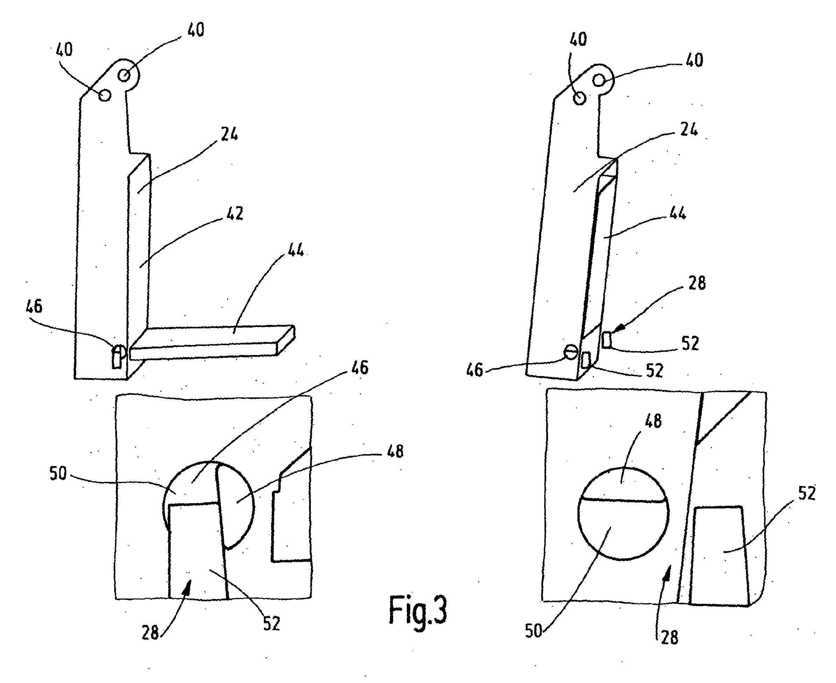

Die geänderte Ausführungsform nach der Fig. 3 wird nur noch insofern erläutert, als sie sich wesentlich von dem Gegenstand nach der Fig. 2 unterscheidet, wobei für dieselben Bauteile dieselben Bezugszeichen verwendet werden, so dass insoweit die bisher getroffenen Ausführungen auch für das weitere zweite Ausführungsbeispiel sinnfällig gelten. Des weiteren sind in der Fig. 3 nur noch das eine Schalenteil 24 gezeigt, sowie jeweils darunterliegend in vergrößerter Darstellung Teile einer modifizierten als Ganzes mit 28 bezeichneten Festlegeeinrichtung.

Die geänderte Ausführungsform nach der Fig. 3 weist wiederum am oberen Ende für das Schalenteil 24 die beiden Anlenkstellen 40 auf, mittels der das Schalenteil 24 schwenkbar und wie in Fig. 2 dargestellt in dem anderen Schalenteil 26 geführt ist. Im Bereich der dort gezeigten Ausnehmung 42 ist ein Modul 44 integriert, dass in der gezeigten Ausführungsform eine Tischeinheit bildet, wobei anstelle der Tischeinheit auch ein Computerbedienfeld oder dergleichen treten könnte. In dem Anbindungsbereich von Modul 44 zu Schalenteil 24 ist eine Gelenkeinrichtung 46 als Teil der Festlegeeinrichtung 28 vorgesehen, die vorzugsweise beidseits des Tischmoduls 44 vorhanden, in dessen ausgeschwenktem Zustand, gemäß der linken Bilddarstellung nach der Fig. 3, mit einem dreh- oder schwenkbaren Sperrglied 48 versehen, das Einschwenken des einen Schalenteiles 24 in den Eingriffsraum 30 hindert, in dem das jeweilige Sperrglied 48 als Vorsprung eines sonstigen Drehzapfens 50 der Gelenkeinrichtung 46 in Anlage ist mit einem am anderen Schalenteil 26 beidseitig angebrachten stegartigen Festlegezapfen 52. Dergestalt ist verhindert, dass ungewollt, beispielsweise durch ungewolltes Anstossen an das ausgeschwenkte oder ausgeklappte Tischmodul 44, die Sicherheitsfunktion wie beschrieben ausgelöst wird.

Ist gemäß der rechten Bilddarstellung nach der Fig. 3 jedoch das Tischmodul 44 in seiner eingeschwenkten Stellung in der Ausnehmung 42, wird über die gemeinsame Schwenkachse durch Verschwenken des Drehzapfens 50 im Gegenuhrzeigersinn das jeweilige Sperrglied 48 nach oben um etwa 90 Grad verschwenkt und die gegenüberliegenden Festlegezapfen 52 sind freigegeben und ermöglichen das Ausschwenken des Schalenteiles 24, gemäß der rechten Bilddarstellung nach der Fig. 2. Da bei etwaig auftretenden Notfällen grundsätzlich die Tische an Fluggastsitzen hochzustellen sind, ist auch insoweit dem Sitzbenutzer eingängig das in der eingeschwenkten Stellung des Moduls 44 die Sicherheitsfunktion auslösbar ist.

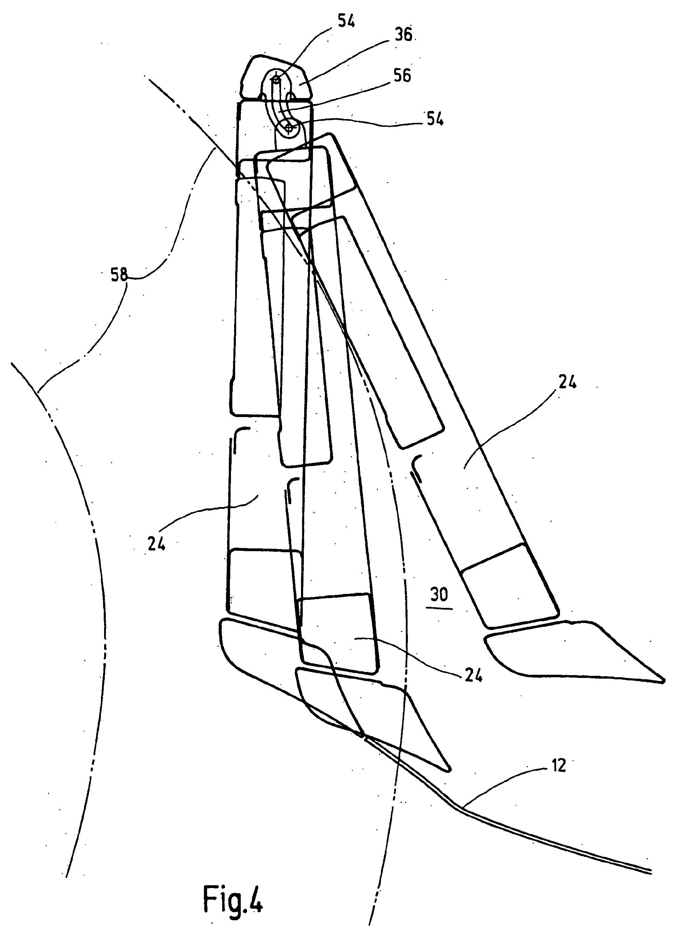

Die Fig.4 zeigt in einer prinzipiellen Seitenansicht eine geänderte Ausführungsform der Sicherheitseinrichtung, bei der das schwenkbare Schalenteil 24 in drei verschiedenen Bewegungssituationen dargestellt ist, und zwar einmal in einer im wesentlichen vertikal verlaufenden Ausgangssituation sowie einmal in der voll ausgeschwenkten Betätigungsposition und in einer Zwischenposition. Das Schalenteil 24 ist nach oben hin in Richtung der bügelförmigen Umfassung 36 mit einem Schwenkzapfen 54 in einer Kulissenführung 56 geführt, wobei der Schwenkzapfen 54 zweimal dargestellt ist, und zwar einmal in der oberen Ausgangsstellung und einmal in der unteren ausgeschwenkten Stellung, bei der der Eingriffsraum 30 in der Struktur der Rückenlehne 12 freigegeben ist. Die strichliniert eingezeichnete Verlaufsbahn 58 zeigt den fiktiven Kopfbewegungsverlauf bei einem heftigen Aufprall des Kopfes auf die Rückenlehnenstruktur, wie er im Crashfall auftreten kann. Aufgrund der gezeigten Kulissenführung 56, die in ihrem unteren Bereich eine Krümmung aufweist, die von der Verlaufsbahn 58 weggerichtet ist, ist dergestalt erreicht, dass in der voll ausgeschwenkten Stellung des Schalenteils 24 der Eingriffsraum 30 im Volumen vergrößert ist, so dass dergestalt ein schädigendes Aufschlagen von Kopfteilen auf der Rückenlehnenstruktur dergestalt mit Sicherheit vermieden werden kann. Durch den gekrümmten Bahnverlauf der Kulissenführung 56 wird neben der eigentlichen Schwenkbewegung um den Schwenkzapfen 54 das Schalenteil 24 auch in Fluglängsrichtung gesehen vom dahinter sitzenden Sitzbenutzer im Crashfall wegbewegt, was den Überlebensraum bezogen auf den Eingriffsraum 30 vergrößert.

## Patentansprüche

1. Sitz, insbesondere Fluggastsitz, mit Sitzkomponenten wie einem Sitzteil (10) und einer Rückenlehne (12) mit einer Gehäuseschale (20), die Bestandteil der Rückenlehne (12) ist oder die zumindest teilweise die Rükkenlehne (12) rückwärtig umfasst und die aus mindestens zwei Schalenteilen (24, 26) besteht, die zumindest in einem Ausgangszustand über eine Festlegeeinrichtung (28) miteinander verbunden sind, **dadurch gekennzeichnet, dass** das eine Schalenteil (24) unter einer schlagartigen Krafteinleitung, wie beispielsweise im Crashfall, sich relativ gegenüber dem anderen Schalenteil (26) derart bewegt, dass ein Eingriffsraum (30) zwischen den Schalenteilen (24, 26) freigegeben ist.

2. Sitz nach Anspruch 1, **dadurch gekennzeichnet, dass** in dem Ausgangszustand das eine Schalenteil (24) derart in dem anderen (26) stationär angeordneten Schalenteil integriert ist, dass zumindest im rückwärtigen Bereich und an den Stellen (32) des Überganges zwischen den Schalenteilen (24, 26) eine gleichförmige Oberfläche realisiert ist.

3. Sitz nach Anspruch 2, **dadurch gekennzeichnet, dass** im Ausgangszustand das eine Schalenteil (24) zur Rückseite der Gehäuseschale (20) derart bündig mit dem anderen Schalenteil (26) abschließt, dass eine im wesentlichen in sich geschlossene Oberseite entsteht, die der sonstigen Kontur (34) der Gehäuseschale (20) im rückwärtigen Bereich nachfolgt.

4. Sitz nach einem der Ansprüche 1 bis 3, **dadurch gekennzeichnet, dass** das andere Schalenteil (26) eine äußere bügelförmige Umfassung (36) aufweist, die in Richtung der Kopfseite das eine Schalenteil (24) schützend übergreift.

5. Sitz nach einem der Ansprüche 1 bis 4, **dadurch gekennzeichnet, dass** die Festlegeeinrichtung (28) im Ausgangszustand das eine Schalenteil (24) im anderen Schalenteil (26) hält und dass bei der schlagartigen Krafteinleitung die Festlegeeinrichtung (28) das eine Schalenteil (24) insoweit freigibt, dass der Eingriffsraum (30) von außen zugänglich ist.

6. Sitz nach einem der Ansprüche 2 bis 5, **dadurch gekennzeichnet, dass** die Festlegeeinrichtung (28) mindestens eine Anlenkstelle (40) aufweist, die die jeweils zuordenbare Stelle (32) des Überganges zwischen den Schalenteilen (24, 26) durchgreift und die in der Art einer Verriegelungs- oder Rasteinrichtung, einer Sollbruchstelle oder einer Schwenkeinrichtung ausgebildet ist.

7. Sitz nach Anspruch 6, **dadurch gekennzeichnet, dass** mindestens zwei Anlenkstellen (40) in gleicher Höhenlage, insbesondere zur Kopfseite des Sitzes hin orientiert vorhanden sind, die die beiden einander gegenüberliegenden Stellen (32) des Überganges zwischen den Sitzschalenteilen (24, 26) durchgreifen.

8. Sitz nach einem der Ansprüche 1 bis 7, **dadurch gekennzeichnet, dass** in das eine Schalenteil (24) ein ausschwenkbares Modul (44), insbesondere in Form einer Tischeinheit, aufgenommen ist und dass Teile der Festlegeeinrichtung (28) im eingeschwenkten Zustand des Moduls (44) das eine Schalenteil (24) gegenüber dem anderen Schalenteil (26) freigeben und zumindest im ausgeschwenkten Zustand die dahingehende Freigabe sperren.

9. Sitz nach Anspruch 8, **dadurch gekennzeichnet, dass** die einen Teile der Festlegeeinrichtung ein drehbares Sperrglied (48) aufweisen, das über das Modul (44) aus einer Sperrstellung in eine Freigabestellung und umgekehrt bewegbar ist, und mit einem Verriegelungsteil (Festlegezapfen 52) zusammenwirkt, das stationär am anderen Schalenteil (26) angeordnet ist.

10. Sitz nach einem der Ansprüche 1 bis 9, **dadurch gekennzeichnet, dass** die genannten Schalenteile (24, 26) einstückig oder aus weiteren Einzelschalenteilen zusammengesetzt sind.

## Claims

1. Seat, in particular air passenger seat, with seat components, such as a seat part (10) and a backrest (12) with a housing shell (20) which is part of the backrest (12) or which at least partially surrounds the rear of the backrest (12) and which comprises at least two shell parts (24, 26) which, at least in an initial state, are connected to each other via a securing device (28), **characterized in that,** under a sudden application of force, such as, for example, in the event of a crash, the one shell part (24) moves relative to the other shell part (26) in such a manner that an engagement space (30) is opened up between the shell parts (24, 26).

2. Seat according to Claim 1, **characterized in that,** in the initial state, the one shell part (24) is integrated in the other shell part (26), which is arranged in a stationary manner, such that a uniform surface is realized at least in the rear region and at the points (32) of the transition between the shell parts (24, 26).

3. Seat according to Claim 2, **characterized in that,** in the initial state, the one shell part (24) to the rear side of the housing shell (20) ends flush with the other shell part (26) such that an essentially inherently closed upper side is produced, said upper side following the further contour (34) of the housing shell (20) in the rear region.

4. Seat according to one of Claims 1 to 3, **characterized in that** the other shell part (26) has an outer bow-shaped surround (36) which engages in a protective manner over the one shell part (24) in the direction of the head side.

5. Seat according to one of Claims 1 to 4, **characterized in that,** in the initial state, the securing device (28) holds the one shell part (24) in the other shell part (26), and **in that**, in the event of a sudden application of force, the securing device (28) releases the one shell part (24) to an extent such that the engagement space (30) is accessible from the outside.

6. Seat according to one of Claims 2 to 5, **characterized in that** the securing device (28) has at least one coupling point (40) which reaches through the respectively assignable point (32) of the transition between the shell parts (24, 26) and which is designed in the manner of a locking or latching device, a predetermined breaking point or a pivoting device.

7. Seat according to Claim 6, **characterized in that** there are at least two coupling points (40) in the same height position, in particular towards the head side of the seat, said coupling points reaching through the two mutually opposite points (32) of the transition between the seat shell parts (24, 26).

8. Seat according to one of Claims 1 to 7, **characterized in that** a module (44) which can be pivoted out, in particular in the form of a table unit, is accommodated in the one shell part (24), and **in that**, in the pivoted-in state of the module (44), parts of the securing device (28) release the one shell part (24) in relation to the other shell part (26) and, at least in the pivoted-out state, block this release.

9. Seat according to Claim 8, **characterized in that** parts of the securing device have a rotatable blocking element (48) which is movable via the module (44) from a blocking position into a release position and vice versa, and interacts with a locking part (securing pin 52) which is arranged in a stationary manner on the other shell part (26).

10. Seat according to one of Claims 1 to 9, **characterized in that** the abovementioned shell parts (24, 26) are composed of a single piece or of further individual shell parts.

## Revendications

1. Siège, en particulier siège pour passager d'avion, comprenant des composants de siège tels qu'une partie de siège (10) et un dossier (12) avec une coque de boîtier (20), qui fait partie du dossier (12) ou qui entoure au moins en partie le dossier (12) dans sa partie arrière et qui se compose d'au moins deux parties de coque (24, 26), qui sont connectées l'une à l'autre au moins dans un état initial par le biais d'un dispositif de fixation (28), **caractérisé en ce qu'**une partie de coque (24) se déplace par rapport à l'autre partie de coque (25) sous l'effet de l'introduction d'une force brutale, comme par exemple dans le cas d'une collision, de telle sorte qu'un espace d'intervention (30) soit libéré entre les parties de coque (24, 26).

2. Siège selon la revendication 1, **caractérisé en ce que** dans l'état initial, l'une des parties de coque (24) est intégrée dans l'autre partie de coque (26) disposée de manière stationnaire, de telle sorte qu'au moins dans la région arrière et au niveau des points (32) de la transition entre les parties de coque (24, 26), une surface uniforme soit créée.

3. Siège selon la revendication 2, **caractérisé en ce que** dans l'état initial, l'une des parties de coque (24) se termine en affleurement avec l'autre partie de coque (26) vers le côté arrière de la coque de boitier (20), de telle sorte qu'un côté supérieur essentiellement fermé en soi soit créé, lequel suit le reste du contour (34) de la coque de boîtier (20) dans la région arrière.

4. Siège selon l'une quelconque des revendications 1 à 3, **caractérisé en ce que** l'autre partie de coque (26) présente une enveloppe extérieure de forme cintrée (36) qui vient en prise par le dessus, dans la direction du côté de la tête, en protégeant la partie de coque (24).

5. Siège selon l'une quelconque des revendications 1 à 4, **caractérisé en ce que** le dispositif de fixation (28) maintient, dans l'état initial, l'une des parties de coque (24) dans l'autre partie de coque (26), et **en ce que** lors de l'introduction d'une force brutale, le dispositif de fixation (28) libère l'une des parties de coque (24) dans une mesure telle que l'espace d'intervention (30) soit accessible depuis l'extérieur.

6. Siège selon l'une quelconque des revendications 2 à 5, **caractérisé en ce que** le dispositif de fixation (28) présente au moins un point d'articulation (40) qui vient en prise à travers le point (32) respectivement associé de la transition entre les parties de coque (24, 26), et qui est réalisé sous la forme d'un dispositif de verrouillage ou d'encliquetage, d'un point destiné à la rupture ou d'un dispositif de pivotement.

7. Siège selon la revendication 6, **caractérisé en ce qu'**au moins deux points d'articulation (40) sont prévus à la même position en hauteur, notamment orientés vers le côté de la tête du siège, lesquels viennent en prise à travers les deux points (32) opposés de la transition entre les parties de coque (24, 26) du siège.

8. Siège selon l'une quelconque des revendications 1 à 7, **caractérisé en ce qu'**un module (44) pivotable vers l'extérieur notamment sous la forme d'une unité de table, est reçu dans l'une des parties de coque (24), et **en ce que** des parties du dispositif de fixation (28) libèrent l'une des parties de coque (24) par rapport à l'autre partie de coque (26) dans l'état rentré par pivotement du module (44), et bloquent cette libération au moins dans l'état pivoté vers l'extérieur.

9. Siège selon la revendication 8, **caractérisé en ce que** les unes des parties du dispositif de fixation présentent un organe de verrouillage rotatif (48) qui peut être déplacé par le biais du module (44) d'une position de verrouillage dans une position de libération et inversement, et coopère avec une partie de verrouillage (tourillon de fixation 52) qui est disposé de manière stationnaire sur l'autre partie de coque (26).

10. Siège selon l'une quelconque des revendications 1 à 9, **caractérisé en ce que** lesdites parties de coque (24, 26) sont réalisées d'une seule pièce ou sont assemblées à partir de parties de coque individuelles supplémentaires.
